# EUROPEAN PATENT SPECIFICATION

(11) **EP 4 440 175 B1**
(45) Date of publication and mention of the grant of the patent: **13.08.2025**
(21) Application number: 23164956.7
(22) Date of filing: 29.03.2023
(51) Int. Cl.: H04W 36/08, H04W 36/00, H04W 16/24

(54) **A SYSTEM OF NODES FOR A CELLULAR NETWORK**
KNOTENSYSTEM FÜR EIN ZELLULARES NETZWERK
SYSTÈME DE NOEUDS POUR UN RÉSEAU CELLULAIRE

(43) Date of publication of application: 02.10.2024
(73) Proprietor: KONTRON TRANSPORTATION FRANCE SAS, 78066 St Quentin Yvelines Cedex (FR)
(72) Inventor: PISON, Laurent, 78760 Jouars Pontchartrain (FR); ASTE, Thierry, 91440 Bures sur Yvette (FR); BOTET, Gil, 78180 Montigny le Bretonneux (FR); GRUET, Christophe, 78180 Montigny le Bretonneux (FR)
(74) Representative: Weiser Voith Gugler Patentanwälte Partnerschaft

(56) References cited:
- CN-A- 112 601 196
- US-A1- 2017 105 161

## Description

The present invention relates to a system comprising a first and a second node for a cellular network, the first node serving a first cell and the second node serving a second cell of two cells distributed along a track, each node having at least two different beams for wireless communication with a user equipment in said node's cell via one of the beams selected by said node.

A cellular network with several radio beams per cell which each cover a different sector of the cell has been defined, e.g., in the most recent 3GPP standard for 5G cellular networks, called 5G-NR (5G New Radio). The different beams can be used by a base station ("node") either for different user equipments ("UEs") to enhance the load capacity of the cell ("spatial multiplexing"), and/or the beam serving a specific UE can be changed when the UE roams within the cell to increase the gain of the wireless communication ("intra-cell mobility beam switching"). Beam switching is transparent and effortless for the UE as the node can measure link quality on its own when beam strength reports from UEs are rare; the node can change between beams without informing the UE.

Inter-cell mobility, i.e. when a UE moves from one cell to another, still requires a classical handover between the nodes of the adjacent cells. In all current cellular networks the decision to hand over a UE is made by the node to which the UE is currently connected (the serving or "source" node). The handover decision of the node is based on both uplink radio metrics collected by the node and downlink radio metrics collected by the UE and reported to the node. The radio metrics reports from the UE not only indicate downlink radio quality of the current connection to the serving node but also received signal strength measurements of neighbouring cells, which is indispensably necessary to make sound handover decisions.

In inter-cell mobility a problem arises with fast moving UEs, such as UEs in a car on a highway, a train on a railway track, or the like. For example, given a typical cell radius of 8 km and a train speed of 240 km/h, a UE stays in a cell for just 2 minutes. Very few radio metrics, if at all, can be gathered from a UE passing the node in that short amount of time to decide on cell switching, and handover becomes risky and prone to errors.

Relevant prior art is disclosed in US 2017/0105161 A1.

It is an object of the invention to provide a system for a cellular network which allows for a more stable and safe handover of UEs travelling fast on a track from one cell to another.

To this end, the invention provides for a system comprising a first and a second node for a cellular network, the first node serving a first cell and the second node serving a second cell of two cells distributed along a track,
each node having at least two different beams for wireless communication with a user equipment in said node's cell via one of the beams selected by said node,
which is characterised in that each beam of the first node covers a different one of a first succession of sections of the track, each beam of the second node covers a different one of a second succession of sections of the track, and the last section in the first succession and the first section in the second succession coincide,
wherein the first node is configured to send a handover request regarding a user equipment to the second node when the beam selected for wireless communication with said user equipment changes from the beam that covers the last but one section of the first node to the beam that covers the last section of the first node.

The invention relies on the beam switching capabilities of modern beam-based cellular networks in a completely new way to provide for a safe and stable handover of fast moving UEs. By superposing the outmost beams of two adjacent cells with multiple beams there is no need to gather uplink radio metrics from the UEs anymore to make a sound handover decision in the source node: The mere fact that an UE has entered the outmost beam of the source node is indicative for the source node that the UE can be safely handed over to the neighbouring target node. The target node, as the UE is already in its (coinciding) outermost beam, can immediately pick up communication with the UE and complete the handover in the ample time the UE stays within its range.

As the source node is constantly aware of the beam over which it communicates with the UE, there is no need for the UE to gather radio metrics of the serving and neighbouring cells, and no need for the source node to wait for such radio metrics reports to make the handover decision. The criterion for the source node to decide an handover comes down to a detection of a change in the radio beam connecting the UE. Not only is the time for gathering radio metrics for the handover saved, but also the detection of a change in the radio beam selected for communication with a UE is a very sure criterion for handover.

Last but not least, superposing the last and first beams of the source and target nodes along the track extends the handover area and thus the available time for handover, allowing for a stable and safe handover of fast moving UEs.

In a first embodiment of the invention, the different beams of one node can originate from the same location, e.g., from a common antenna mast in the vicinity of the track. The beams would then have to be sent and received directionally from/to the mast, e.g., by a set of directional antennas or an antenna array on the mast, as intended in the 5G-NR standard for beams covering different sectors around a mast. In this way, conventional 5G-NR antenna equipment could be used for the nodes of the system of the invention.

In a second, particularly advantageous embodiment of the invention each node has one antenna per beam and the antennas of each node are distributed along the track with mutual spacing/s. In that way a new type of radio equipment is created, namely, a beam-based node with mutually spaced beam origins, each beam covering one of the successive sections of a track passing the cell of the node. In this embodiment, also omnidirectional antennas could be used since the antennas are put one after the other along the track, each antenna covering one section of the succession of sections in the cell. Of course, directional antennas could be used here, too.

To minimise interference in the area of overlap of the last and first beams of the first (source) and second (target) nodes, when the wireless communication is segmented into time frames, the first and second nodes may be synchronized in time as to their time frames. The nodes then share the same resource grid and can better coordinate the allocation of resource blocks in the resource grid.

In all embodiments the second node is preferably configured to accept the handover request and to select the beam that covers the first section of the second node for the (at least initial) communication with the UE that had just been handed over.

The inventive system works with any number of beams per node greater or equal two. For example, the node at the beginning or end of a track may have only two beams. Preferably, however, each node has three beams or more, e.g., eight beams.

Increasing the number of beams per node will decrease the amount of overall redundancy introduced by the overlapping beams in the system. Hence, an optional measure to minimize exuberant redundancy is to make the first and last sections in each succession of sections in a cell shorter than any of the other sections in said succession. The amount of overlapping beam lengths per length unit of the track can thus be decreased, of course only up to that point that still allows for a safe and stable handover.

As an added benefit, the system of the invention allows for fail-safe redundancy should one of the nodes fail. The adjacent nodes may then increase the power of their neighbouring beams to cover at least a part of the cell of the failing node. To this end, the first node may be configured to increase, in case of a failure of the second node, the power of the beam that covers the last section of the first node.

The system of the invention is suited for any beam-based cellular network. For an easy rollout in existing environments each node is preferably configured to cooperate with a cellular network according to a 3GPP 5G-NR standard.

The track can be any sort of track along which a UE can move, for example, a highway track for cars, a racing track for all sorts of sporting commute, a railway track for trains, etc.

The invention will now be explained in more detail below on the basis of exemplary embodiments thereof with reference to the accompanying drawings, in which show:
Fig. 1 a first embodiment of the system the invention in a schematic perspective view;
Fig. 2 a second embodiment of the system of the invention in a schematic view;
Fig. 3 a sequence diagram of the initiation of the handover in the system of the invention;
Fig. 4 an exemplary allocation of channel resources; and
Figs. 5 and 6 further embodiments of the system of the invention in schematic perspective views.

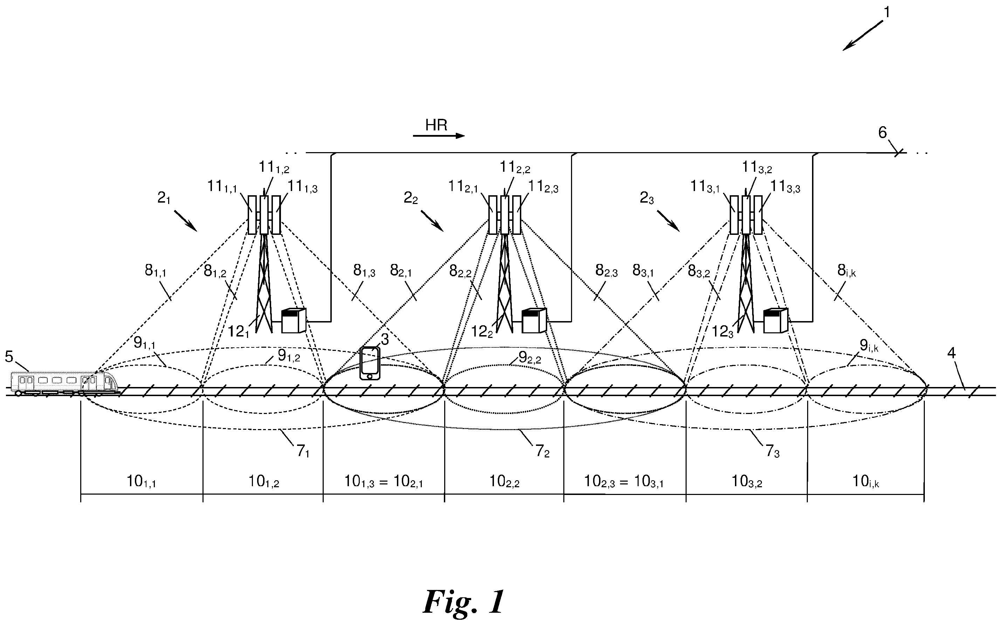

Fig. 1 shows a system 1 comprised of at least two nodes 2₁, 2₂, ..., generally 2ᵢ, (here: three exemplary nodes 2₁, 2₂, 2₃) for wireless communication with at least one user equipment (UE) 3 within their communication range. The UEs 3 are moving along a track 4, e.g., a railway track by riding on a train 5. The track 4 may have the form of any arbitrary spline in space, be it straight, curved, meandering etc.

The system 1 is part of a larger cellular network (not shown) connected via one or more interface/s 6 to the nodes 2ᵢ. Each node 2ᵢ is responsible for and wirelessly covers one of several cells 7₁, 7₂, ..., generally 7ᵢ. The cells 7ᵢ together form the coverage area of the cellular network through which the UEs 3 roam from cell to cell when moving.

The cells 7ᵢ may have any form and size. Each cell 7ᵢ neighbours at least one other cell 7ⱼ (j ≠ i). In the example of Fig. 1 where the UEs 3 move along the track 4 the cells 7ᵢ may be arranged in a chain-like manner following the track 4, forming a so-called linear or one-dimensional cellular network in which the track 4 passes all cells 7ᵢ one after the other. However, the cellular network could as well be a non-linear, two-dimensional cellular network wherein the cells two-dimensionally neighbour one another and form a contiguous patchwork of cells 7ᵢ. Here, the track 4 will usually pass through only a subset of the cells 7ᵢ along its way, and at least the cells 7ᵢ passed by the track 4 - and their respective nodes 2ᵢ - are designed as described herein.

The UEs 3 may be of any type known in the art, e.g., mobile phones, smartphones, wireless modems, etc.

The cellular network, of which the system 1 is a part, can be of any type which incorporates beam switching capabilities within the cells as explained at the outset and in detail below. One embodiment of such a beam-based cellular network is a cellular network according to a 3GPP 5G-NR standard. The parts of the 5G-NR standard that deal in particular with the 5G radio access and the signaling protocol between the UEs 3 and the nodes 2ᵢ, and between the nodes 2ᵢ, are defined, e.g., in ETSI Technical Standards TS 38.300 (Global 5G RAN Overview), TS 38.211 (Physical Layer), TS 38.212 (MAC Layer), TS 38.213 and TS 38.214 (Procedures), TS 38.331 (RRC: UE - Radio Node Signaling Protocol) and TS 38.423 (Xn-AP: Inter Radio Node Signaling Protocol), all of which are incorporated herein by reference. The functionalities of the nodes 2ᵢ and UEs 3 may thus - for a smooth cooperation with and within 5G-NR cellular networks - be as described in said standards, except for the differences described in the present disclosure.

In a beam-based cellular network such as 5G-NR, each node 2i covers its respective cell 7ᵢ with a set of different radio beams 8_{i,1}, 8_{i,2}, ..., generally 8_{i,k}. Each beam 8_{i,k} covers another sector 9_{i,k} of the cell 7ᵢ and - as far as the track 4 is concerned - another section 10_{i,k} of the track 4 in that cell 7ᵢ.

Different beams 8_{i,k} can be used by a node 2ᵢ to communicate with different UEs 3 in different sectors 9_{i,k} or sections 10_{i,k}, e.g., to multiply the number of UEs 3 that can be concurrently served by the node 2ᵢ in the cell 7ᵢ. Or, for a specific UE in a specific section 9_{i,k} or sector 10_{i,k} the best beam 8_{i,k} can be selected by the node 2ᵢ to maximise link quality and/or gain with that UE 3. In 5G-NR, in the wireless communication between nodes 2ᵢ and UEs 3 the beams 8_{i,k} are identified by their beam index in the SSB (synchronisation signal block).

The selection of the - individually allocated or most suited - beam 8_{i,k} for a specific UE 3 is done autonomously by the node 2ᵢ, transparently and seamlessly for the UE 3, on the basis of beam link quality and/or gain measurements by the node 2ᵢ and/or periodic beam link quality/gain reports of the UEs about the currently selected beam and possible other beams 8_{i,k} of the node 2ᵢ. From the current connection of the node 2ᵢ to a UE 3 via the selected beam 8_{i,k} the node 2ᵢ implicitely and necessarily knows the sector 9_{i,k}, or section 10_{i,k} of the track 4, respectively, the UE 3 is in.

The functionalities of beam selection, beam switching and (optional) beam refinement of the beam 8_{i,k} used for the current connection of the node 2ᵢ to the UE 3 may be performed, e.g., as defined in the 5G-NR standard.

To provide a cell 7ᵢ with multiple beams 8_{i,k} there are several possibilities. In the embodiment of Fig. 1, each node 2ᵢ has a set of antennas 11_{i,1}, 11_{i,2}, ..., generally 11_{i,k}, one antenna 11_{i,k} per beam 8_{i,k}. The antennas 11_{i,k} of a node 2ᵢ are directional antennas arranged at the same location, e.g., a mast 12ᵢ, and directed into/onto different sectors 9_{i,k} or sections 10_{i,k}, respectively. It goes without saying that the antennas 11_{i,k} of a node 2ᵢ could be individual antennas or formed by a joint antenna array capable of emitting different beams 8_{i,k} into different directions, be it sequentially or concurrently.

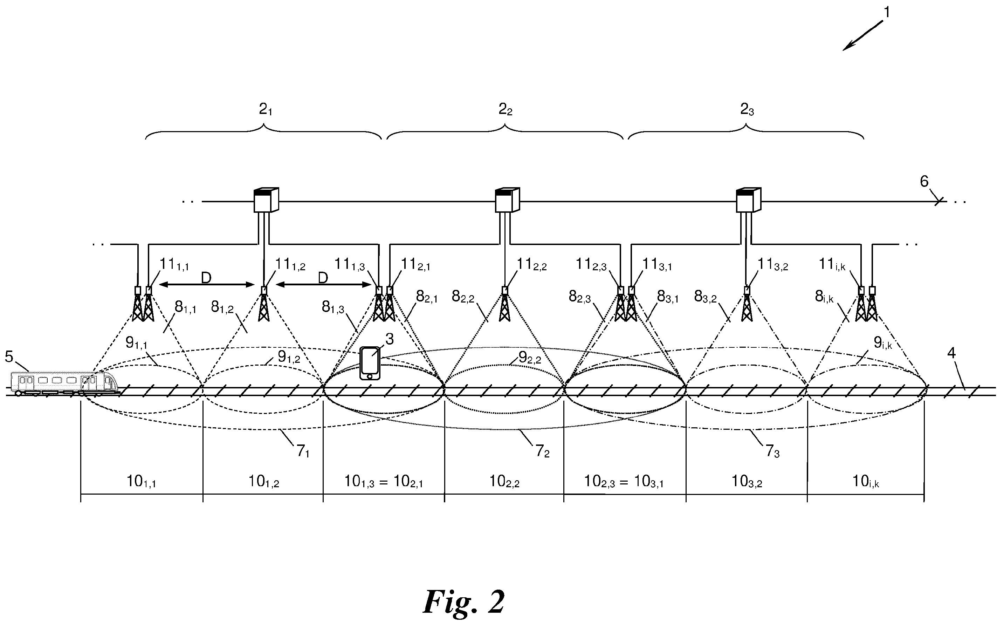

In the embodiment of Fig. 2, the antennas 11_{i,k} of a node 2ᵢ are physically separated and distributed over the cell 7ᵢ - or along the track 4, respectively - with mutual spacings D. The spacings D may all be the same, i.e., the antennas 11_{i,k} equally spaced, or different. In this embodiment it is not necessary to use directional antennas for the antennas 11_{i,k} since they are geographically distanced from on another even omnidirectional antennas could be used. Of course, directional antennas could be used for the antennas 11_{i,k} in the embodiment of Fig. 2, too.

In both embodiments the term "antenna" comprises both single antennas as well as groups or arrays of antennas, one for each beam 8_{i,k}.

The beam management of the beam-based system 1 is used to ease the handover of a UE 3 that is currently connected to a first ("source") node 2ᵢ (here: the node 2₁ of the cell 7₁) to a second ("target") node 7ᵢ₊₁ (here: the node 2₂) of a neighbouring cell 7ᵢ₊₁ (here: the cell 7₂). In classical handover scenarios the source node 2₁ makes a handover decision based on both own beam link quality measurements as well as beam link quality and gain measurements reported from the UE 3. As explained at the outset, for fast moving UEs 3, e.g., on a train 5, the time the UE 3 stays within the source cell 7₁ may not be sufficient for the source node 2₁ to gather enough, or gather any at all, such uplink radio metrics from the UE 3 before it leaves the cell 7₁. The source node 7₁ is then unable to make a reliable handover decision, or any handover decision at all, before the UE 3 has left the source cell 7₁. This is overcome by the following configuration.

Firstly, the antennas 11_{i,k} and, hence, the beams 8_{i,k} are arranged in such a way along the track 4 that the last section 10_{1,3} in the succession 10_{1,1} - 10_{1,2} - 10_{1,3} of sections of a first (source) node 2₁ substantially coincides with the first section 10_{2,1} in the succession 10_{2,1} - 10_{2,2} - 10_{2,3} of sections of a neighbouring second (target) node 2₂.

Secondly, the handover decision of the source node 2₁ for a UE 3 moving from the source cell 7₁ to the target cell 7₂ is made dependent on whether the UE 3 is within the last section 10_{1,3} of the source cell 7₁, more specifically whether the UE 3 has entered the last section 10_{1,3} from the last but one section 10_{1,2} of the source cell 7₁ when viewed in the moving direction 7₁ → 7₂ of the UE 3. If so, the source node 2₁ decides on handover and sends a handover request HR to the target node 2₂.

This means that the source node 2₁ does not need to wait for any uplink radio metrics reports, be it as to cells 7ᵢ or beams 8_{i,k}, from the UE 3 to decide on handover, but simply makes all UEs 3 which enter its last section 10_{1,3} from its penultimate section 10_{1,2} eligible for handover to the neighbouring (target) node 2₂.

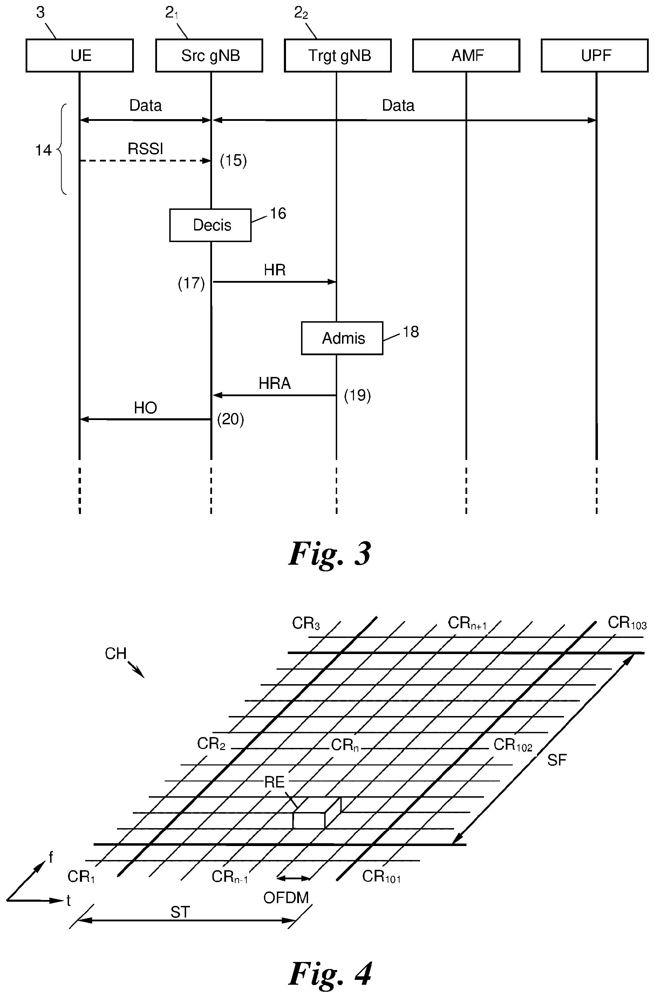

Fig. 3 shows an exemplary sequence diagram of this inter-cell handover from the source node 2₁ to the target node 2₂. In this example, the cellular network, of which the system 1 is a part, is a 5G-NR cellular network, and the source and target nodes 2₁, 2₂ are similar to gNodeB base stations of the 5G-NR standard, except for the presently disclosed modifications for beam-based handover. The entities AMF and UPF depicted in Fig. 4 are the logical entities "Access Management Function" and "User Plane Function" of the 5G Core Network (5GC) of the 5G-NR standard.

Before handover, the UE 3 exchanges user data via the source node 2₁ with the UPF (phase 14).

While in phase 14, the UE 3 may (optionally) report beam link quality and gain measurements of the beams 8_{1,k} it is able to receive to the source node 2₁, see step 15. However, step 15 is not inevitably necessary for the source node 2₁ to make the handover decision as described herein.

In the phase 14 the source node 2₁ is always aware of which beam 8_{1,k} it selects for the wireless communication with the UE 3. Whenever the source node 2₁ detects in phase 14 that the beam 8_{1,k} it selects for the wireless communication with the UE 3 changes from the beam 8_{1,2} that covers the last but one section 10_{1,2} of its cell 7₁ to the beam 8_{1,3} that covers the last section 10_{1,3} of its cell 7₁, it decides on handover (step 16) and sends a handover request HR to the target node 2₂ (step 17).

The target node 2₂ can readily accept any such handover request HR as the UE 3 to which it pertains is already within the first section 10_{2,1} covered by its first beam 8_{2,1}. The target node 2₂ thus accepts the handover request HR (step 18) and returns a handover request acknowledge (HRA) message to the source node 2₁ (step 19). The source node 2₁ instructs the UE 3 to switch to the new cell 7₂ by sending a handover command (HO, "RRC Reconfiguration Message") to the UE 3 (step 20).

All what follows then corresponds to the conventional execution and completion steps of a handover in a cellular network as defined, e.g., in the 5G-NR standard and hence does not need not to be explained in detail herein; reference is made to the respective cellular network standards such as 5G-NR for handover execution and completion. However, the target node 2₂, having accepted the handover request HR in step 18, implicitly knows - because of the overlap of the beams 8_{1,3} and 8_{2,1} - that the accepted UE 3 is within the reach of its first beam 8_{2,1} and may select that beam, at least initially, for communication with the UE 3.

Fig. 4 shows an exemplary definition of a communication channel CH used between the nodes 2ᵢ and the UEs 3 in the wireless communication via the beams 8_{i,k}.

The channel CH is subdivided in frequency f into frequency bands SF and in time t into time slots ST; a combination of a frequency band SF and a time slot ST is called a channel resource CRₙ. An integer multiple of time slots ST forms a time frame F of the channel CH. Of course, the communication channel CH could also be divided only in time t into time slots ST, such as in TDMA (time division multiple access) standards; or be divided only in frequency f into frequency bands SF, such as in FDMA (frequency division multiple access) standards. In 5G-NR, a channel resource CRₙ is called a "resource block" and carries, e.g., six or seven OFDM symbols on 12 subcarriers, one subcarrier of one OFDM symbol representing a resource element RE of the resource block CRₙ.

For minimizing interference in the area of overlap of the last beam 8_{1,3} of the source node 2₁ and the first beam 8_{2,1} of the target node 2₂, and subsequently for maximizing the usage of the resource grid shown in Fig. 4, the source node 2₁ and the target node 2₂ may be synchronized in time as to their respective time frames F. This is not necessary if a certain amount of interference is tolerable or the source and target nodes 2₁, 2₂ use different frequency bands SF.

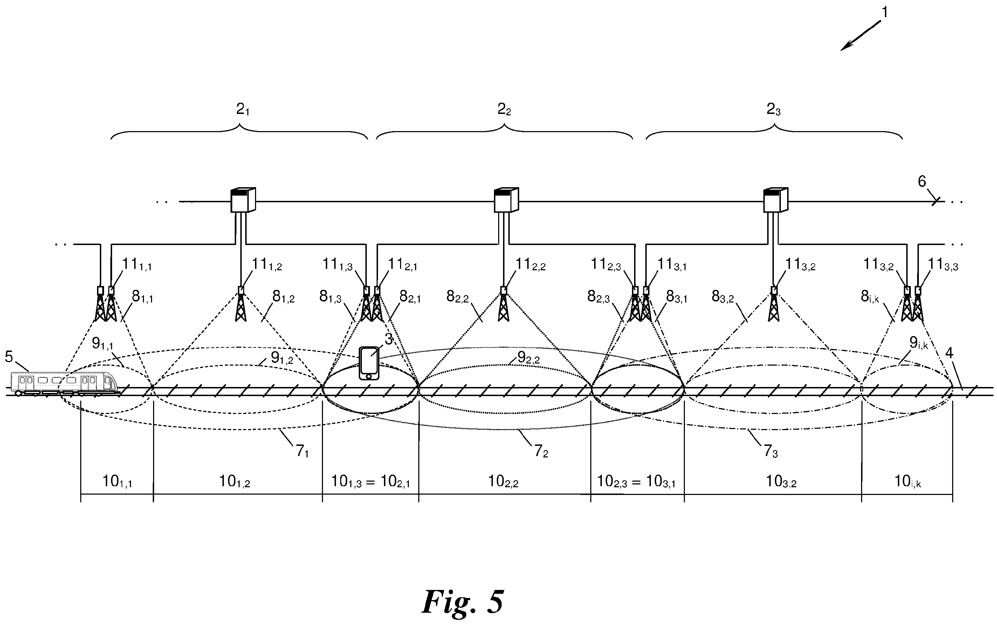

Fig. 5 shows a further embodiment of the system 1 wherein the beams 8_{1,k} of a node 2ᵢ, and thus the sections 10_{i,k} of the track 4 covered by these beams, differ in size. For example, the first and last sections 10_{1,1} and 10_{1,3} of the cell 7₁ can be made shorter than any other section 10_{1,2} of the cell 7₁. This decreases the amount of overlapping sections 10_{i,k} along the track 4 relatively to the entire length of the track 4, i.e. per length unit of the track 4. However, a lower limit for the reduction of the first and last sections 10_{i,k} of a cell 7ᵢ is the amount of time they provide for the initiation (Fig. 3), execution and completion of the handover of the UE 3.

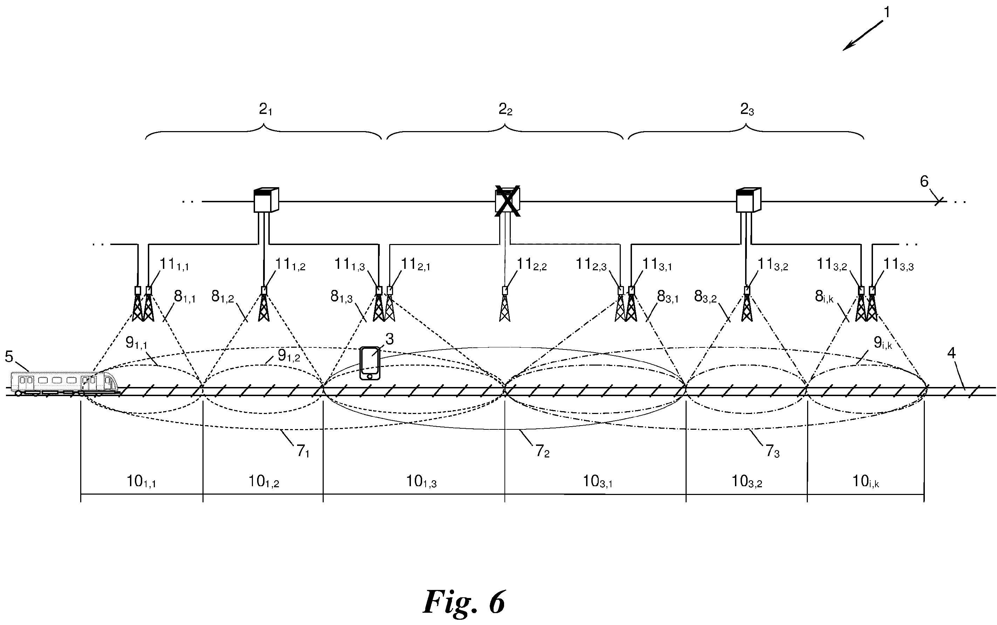

Fig. 6 shows an added benefit of the system 1. In case of a failure of a node 2ᵢ (here: the node 2₂), one or both of the neighbouring nodes 2ᵢ (here: the nodes 2₁ and 2₃) may increase the power of their last and/or first beams 8_{1,3} and 8_{3,1,} respectively, to reach into the intermediate section/s (here: the section 10_{2,2}) of the failing node 2₂. This allows for an emergency service in the cell 7₂ of the failing node 2₂ by the neighbouring nodes 2₁ and 2₃.

The invention is not restricted to the specific embodiments described in detail herein but encompasses all variants, combinations and modifications thereof that fall within the framework of the appended claims.

## Claims

1. A system comprising a first and a second node (2ᵢ) for a cellular network, the first node (2₁) serving a first cell (7₁) and the second node (2₂) serving a second cell (7₂) of two cells (7ᵢ) distributed along a track (4),
each node (2ᵢ) having at least two different beams (8_{i,k}) for wireless communication with a user equipment (3) in said node's cell (7ᵢ) via one of the beams (8_{i,k}) selected by said node (2ᵢ),
wherein each beam (8_{i,k}) of the first node (2₁) covers a different one of a first succession of sections (10_{1,k}) of the track (4), each beam (8_{2,k}) of the second node (2₂) covers a different one of a second succession of sections (10_{2,k}) of the track (4),
**characterised in that** the last section (10_{1,3}) in the first succession and the first section (10_{2,1}) in the second succession coincide,
wherein the first node (2₁) is configured to send a handover request (HR) regarding a user equipment (3) to the second node (2₂) when the beam (8_{i,k}) selected for wireless communication with said user equipment (3) changes from the beam (8_{1,2}) that covers the last but one section (8_{1,2}) of the first node (2₁) to the beam (8_{1,3}) that covers the last section (8_{1,3}) of the first node (2₁).

2. The system according to claim 1, wherein each node has one antenna (11_{i,k}) per beam (8_{i,k}) and the antennas (11_{i,k}) of each node (2ᵢ) are distributed along the track (4) with mutual spacing/s (D).

3. The system according to claim 2, wherein the antennas (11_{i,k}) are omnidirectional.

4. The system according to any one of claims 1 to 3, wherein the wireless communication is segmented into time frames (F) and the first node (2₁) and the second node (2₂) are synchronised in time as to their time frames (F).

5. The system according to any one of claims 1 to 4, wherein the second node (2₂) is configured to accept the handover request (HR) and to select the beam (8_{2,1}) that covers the first section (10_{2,1}) of the second node (2₂).

6. The system according to any one of claims 1 to 5, wherein each node (2ᵢ) has at least three beams (8_{i,k}).

7. The system according to claim 6, wherein the first and last sections (10_{i,1}, 10_{i,3}) in each succession are shorter than any of the other sections (10_{i,2}) in said succession.

8. The system according to any one of claims 1 to 7, wherein the first node (2₁) is configured to increase, in case of a failure of the second node (2₂), the power of the beam (8_{1,3}) that covers the last section (10_{1,3}) of the first node (2₁).

9. The system according to any one of claims 1 to 8, wherein each node is (2ᵢ) configured to cooperate with a cellular network according to a 3GPP 5G-NR standard.

10. The system according to any one of claims 1 to 9, wherein the track (4) is a railway track.

## Patentansprüche

1. System, umfassend einen ersten und einen zweiten Knoten (2ᵢ) für ein zellulares Netzwerk, wobei der erste Knoten (2₁) eine erste Zelle (7₁) und der zweite Knoten (2₂) eine zweite Zelle (7₂) von zwei Zellen (7ᵢ) bedient, die entlang einer Strecke (4) verteilt sind,
wobei jeder Knoten (2ᵢ) mindestens zwei verschiedene Strahlen (8_{i,k}) zur drahtlosen Kommunikation mit einem User Equipment (3) in der Zelle (7ᵢ) des genannten Knotens über einen der vom genannten Knoten (2ᵢ) ausgewählten Strahlen (8_{i,k}) hat,
wobei jeder Strahl (8_{i,k}) des ersten Knotens (2₁) einen anderen einer ersten Folge von Abschnitten (10_{1,k}) der Strecke (4) abdeckt, wobei jeder Strahl (8_{2,k}) des zweiten Knotens (2₂) einen anderen einer zweiten Folge von Abschnitten (10_{2,k}) der Strecke (4) abdeckt,
**dadurch gekennzeichnet, dass** der letzte Abschnitt (10_{1,3}) in der ersten Folge und der erste Abschnitt (10_{2,1}) in der zweiten Folge zusammenfallen,
wobei der erste Knoten (2₁) dazu ausgebildet ist, eine Handover-Anforderung (HR) bezüglich eines User Equipment (3) an den zweiten Knoten (2₂) zu senden, wenn der zur drahtlosen Kommunikation mit dem genannten User Equipment (3) ausgewählte Strahl (8_{i,k}) von dem Strahl (8_{1,2}), der den vorletzten Abschnitt (8_{1,2}) des ersten Knotens (2₁) abdeckt, zu dem Strahl (8_{1,3}), der den letzten Abschnitt (8_{1,3}) des ersten Knotens (2₁) abdeckt, wechselt.

2. System nach Anspruch 1, wobei jeder Knoten eine Antenne (11_{i,k}) pro Strahl (8_{i,k}) aufweist und die Antennen (11_{i,k}) jedes Knotens (2ᵢ) entlang der Strecke (4) mit gegenseitigem Abstand/gegenseitigen Abständen (D) verteilt sind.

3. System nach Anspruch 2, wobei die Antennen (11_{i,k}) ungerichtet sind.

4. System nach einem der Ansprüche 1 bis 3, wobei die drahtlose Kommunikation in Zeitfenster (F) segmentiert ist und der erste Knoten (2₁) und der zweite Knoten (2₂) hinsichtlich ihrer Zeitfenster (F) zeitlich synchronisiert sind.

5. System nach einem der Ansprüche 1 bis 4, wobei der zweite Knoten (2₂) dazu ausgebildet ist, die Handover-Anforderung (HR) anzunehmen und den Strahl (8_{2,1}) auszuwählen, der den ersten Abschnitt (10_{2,1}) des zweiten Knotens (2₂) abdeckt.

6. System nach einem der Ansprüche 1 bis 5, wobei jeder Knoten (2ᵢ) zumindest drei Strahlen (8_{i,k}) hat.

7. System nach Anspruch 6, wobei der erste und der letzte Abschnitt (10_{i,1}, 10_{i,3}) in jeder Folge kürzer als jeder der anderen Abschnitte (10_{i,2}) in der genannten Folge sind.

8. System nach einem der Ansprüche 1 bis 7, wobei der erste Knoten (2₁) dazu ausgebildet ist, im Fall eines Ausfalls des zweiten Knotens (2₂) die Leistung des Strahls (8_{1,3}) zu erhöhen, der den letzten Abschnitt (10_{1,3}) des ersten Knotens (2₁) abdeckt.

9. System nach einem der Ansprüche 1 bis 8, wobei jeder Knoten (2ᵢ) dazu ausgebildet ist, mit einem zellularen Netzwerk gemäß einem 3GPP 5G-NR-Standard zusammenzuarbeiten.

10. System nach einem der Ansprüche 1 bis 9, wobei die Strecke (4) ein Eisenbahngleis ist.

## Revendications

1. Système comprenant un premier et un second nœud (2ᵢ) pour un réseau cellulaire, le premier nœud (2₁) servant une première cellule (7₁) et le second nœud (2₂) servant une seconde cellule (7₂) parmi deux cellules (7ᵢ) réparties le long d'une voie (4),
chaque nœud (2ᵢ) ayant au moins deux faisceaux (8_{i,k}) différents pour communication sans fil avec un équipement utilisateur (3) dans la cellule (7ᵢ) dudit nœud via l'un des faisceaux (8_{i,k}) choisis par ledit nœud (2ᵢ),
dans lequel chaque faisceau (8_{i,k}) du premier nœud (2₁) couvre une section différente parmi une première succession de sections (10_{1,k}) de la voie (4), chaque faisceau (8_{2,k}) du second nœud (2₂) couvre une section différente parmi une seconde succession de sections (10_{2,k}) de la voie (4),
**caractérisé en ce que**
la dernière section (10_{1,3}) dans la première succession et la première section (10_{2,1}) dans la seconde succession coïncident,
dans lequel le premier nœud (2₁) est conçu pour envoyer une requête de transfert (HR) concernant un équipement utilisateur (3) au second nœud (2₂) lorsque le faisceau (8_{i,k}) choisi pour la communication sans fil avec ledit équipement utilisateur (3) passe du faisceau (8_{1,2}) qui couvre l'avant-dernière section (8_{1,2}) du premier nœud (2₁) au faisceau (8_{1,3}) qui couvre la dernière section (8_{1,3}) du premier nœud (2₁).

2. Système selon la revendication 1, dans lequel chaque nœud a une antenne (11_{i,k}) par faisceau (8_{i,k}) et les antennes (11_{i,k}) de chaque nœud (2ᵢ) sont distribuées le long de la voie (4) avec un ou plusieurs espacement/s mutuel/s (D).

3. Système selon la revendication 2, dans lequel les antennes (11_{i,k}) sont omnidirectionnelles.

4. Système selon l'une quelconque des revendications 1 à 3, dans lequel la communication sans fil est segmentée en fenêtres temporelles (F) et le premier nœud (2₁) et le second nœud (2₂) sont synchronisés dans le temps quant à leurs fenêtres temporelles (F).

5. Système selon l'une quelconque des revendications 1 à 4, dans lequel le second nœud (2₂) est conçu pour accepter la requête de transfert (HR) et pour choisir le faisceau (8_{2,1}) qui couvre la première section (10_{2,1}) du second nœud (2₂).

6. Système selon l'une quelconque des revendications 1 à 5, dans lequel chaque nœud (2i) a au moins trois faisceaux (8_{i,k}).

7. Système selon la revendication 6, dans lequel les première et dernière sections (10_{i,1}, 10_{i,3}) dans chaque succession sont plus courtes que toutes les autres sections (10_{i,2}) dans ladite succession.

8. Système selon l'une quelconque des revendications 1 à 7, dans lequel le premier nœud (2₁) est conçu pour augmenter, en cas de défaillance du second nœud (2₂), la puissance du faisceau (8_{1,3}) qui couvre la dernière section (10_{1,3}) du premier nœud (2₁).

9. Système selon l'une quelconque des revendications 1 à 8, dans lequel chaque nœud (2ᵢ) est conçu pour coopérer avec un réseau cellulaire selon une norme 5G-NR 3GPP.

10. Système selon l'une quelconque des revendications 1 à 9, dans lequel la voie (4) est une voie de chemin de fer.
